(19) **Europäisches Patentamt**
**European Patent Office**
**Office européen des brevets**

(11) **EP 3 332 624 B1**

(12) **EUROPÄISCHE PATENTSCHRIFT**

(45) Veröffentlichungstag und Bekanntmachung des Hinweises auf die Patenterteilung:
**11.06.2025  Patentblatt 2025/24**

(21) Anmeldenummer: **17200879.9**

(22) Anmeldetag: **09.11.2017**

(51) Internationale Patentklassifikation (IPC):
**A01C 21/00** (2006.01)      **H04L 12/423** (2006.01)

(52) Gemeinsame Patentklassifikation (CPC):
**A01C 21/00; H04L 12/423**

(54) **LANDWIRTSCHAFTLICHE MASCHINE UND VERFAHREN ZU DEREN BETRIEB**

AGRICULTURAL MACHINE AND METHOD FOR ITS OPERATION

ENGIN AGRICOLE ET SON PROCÉDÉ DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.12.2016  DE 102016123539**

(43) Veröffentlichungstag der Anmeldung:
**13.06.2018  Patentblatt 2018/24**

(73) Patentinhaber: **Horsch Maschinen GmbH**
**92421 Schwandorf (DE)**

(72) Erfinder:
• **ROTHMUND, Matthias**
**92421 Schwandorf (DE)**
• **VILLWOCK, Sebastian**
**92421 Schwandorf (DE)**
• **POLLINGER, Philipp**
**92421 Schwandorf (DE)**
• **FRITSCH, Stephan**
**92421 Schwandorf (DE)**
• **KAGERER, Christian**
**92421 Schwandorf (DE)**

(74) Vertreter: **Benninger, Johannes**
**Benninger Patentanwaltskanzlei**
**Dr.-Leo-Ritter-Strasse 5**
**93049 Regensburg (DE)**

(56) Entgegenhaltungen:
WO-A1-2013/103937      DE-A1- 10 324 724
DE-A1- 102010 061 241   DE-B4- 10 310 302

## Beschreibung

Die vorliegende Erfindung betrifft eine landwirtschaftliche Maschine mit einem verbesserten System zur Maschinendiagnose mit den Merkmalen des unabhängigen Anspruchs 1. Die Erfindung betrifft zudem ein Verfahren zum Betreiben einer derartigen landwirtschaftlichen Maschine mit den Merkmalen des unabhängigen Verfahrensanspruchs 9.

In der Landwirtschaft werden verschiedenste Maschinen eingesetzt, um landwirtschaftliche Flächen zu bearbeiten bzw. um bspw. landwirtschaftliche Verteilgüter auszubringen, zu ernten oder um landwirtschaftliche Maschinen für eine Feldarbeit über die Fläche zu ziehen. Derartige Maschinen werden bspw. als Traktoren, Erntemaschinen oder Verteilmaschinen bezeichnet. Allen derartigen Maschinen gemein ist, dass diese jeweils vorzugsweise elektrisch angesteuerte bzw. betriebene verschiedenste Aktoren, Stellglieder, Sensoren, Stellelemente oder dergl. aufweisen, mittels derer die jeweils auszuführenden Arbeiten durchgeführt bzw. Positionen und Arbeitsstellungen ausgewertet und entsprechende Arbeitswerkzeuge angesteuert werden.

Zur Verteilung von landwirtschaftlichen Verteilgütern wie Saatgut, Dünger oder dergl. werden bspw. Pflanzenschutzspritzen, Sämaschinen, Einzelkornsämaschinen, Düngerstreuer oder dergl. eingesetzt, wobei diese in der Regel jeweils wenigstens zwei Funktionseinheiten wie bspw. Reiheneinheiten, Düseneinheiten oder dergl. aufweisen, mittels welchen das zu verteilende Verteilgut auf einer landwirtschaftlichen Fläche ausgebracht wird. Zu diesem Zweck können die Reiheneinheiten bzw. Düseneinheiten verschiedenste Aktoren, Sensoren, Stellelemente, Stellglieder oder dergl. aufweisen, welche über pneumatische, hydraulische insbesondere jedoch über elektrische Signale angesteuert werden bzw. welche elektrische Signale ausgeben können.

Eine landwirtschaftliche Verteilmaschine ist aus der DE 10 2006 038 688 A1 bekannt. Um eine einfache und sichere Zu- und Abschaltung der einzelnen Spritzdüsen einer als Mehrfachdüseneinheit ausgeführten Düseneinheit zu gewährleisten, ist bei dieser Maschine vorgesehen, dass die Steuerleitung bzw. das Steuersystem als CAN-Bus (Controller Area Network) System ausgeführt ist.

Eine weitere landwirtschaftliche Maschine bzw. eine weitere landwirtschaftliche Verteilmaschine findet sich in der DE 10 2010 061 241 A1 beschrieben. Um nicht jedem Stellelement und Stellglied mindestens einen Mikroprozessor, einen Energiespeicher und eine CAN-Bus-Anbindung zuzuordnen, ist vorgesehen, dass Gruppen von Stellgliedern gebildet werden, welche jeweils über eine gemeinsame Steuereinheit angesteuert werden, wodurch die maximale Anzahl an ansteuerbaren Stellglieder erhöht werden kann. Die Kommunikation erfolgt jeweils mittels eines CAN-Bus-Systems. Um die Position der Steuereinheiten im CAN-Bus-System zu bestimmen, ist eine weitere elektrische Steuerleitung parallel zum CAN-Bus vorgesehen, sowie in jeder Steuereinheit ein Schalter, über den der Mikroprozessor die Steuerleitung zur nächsten Steuereinheit weiterschalten kann. Im ersten Schritt kann die Steuerleitung in allen Geräten bzw. Steuereinheiten nicht durchgeschaltet sein. Somit kann ein an der Steuerleitung anliegendes Signal nur von der ersten Steuereinheit empfangen werden, wobei diese nun mit einem Steuerrechner kommuniziert, da dieser nun ein Signal empfängt. Der Steuerrechner kann die Steuereinheit nun identifizieren und ihr eine Adresse im CAN-Bus-System und somit eine Position an der landwirtschaftlichen Maschine zuordnen. Danach kann der Steuereinheit der Befehl gegeben werden, die Steuerleitung weiter zu schalten. Dies kann auch automatisch geschehen. Danach kann die nächste Steuereinheit in der Reihe das an der Steuerleitung anliegende Signal empfangen. Ab hier kann der gleiche Ablauf wie bei der ersten Steuereinheit beginnen. Durch Wiederholen dieser Prozedur kann allen Geräten am CAN-Bus eine eindeutige Position zugeordnet werden.

Eine weitere landwirtschaftliche Verteilmaschine ist durch die DE 10 2010 061 241 A1 offenbart. Die landwirtschaftliche Verteilmaschine umfasst zumindest eine Steuereinheit, vorzugsweise mehrere Steuereinheiten. Der Steuereinheit bzw. den Steuereinheiten sind Gruppen von Stellgliedern bzw. mehrere elektrische Stellelemente oder Einheiten zum Ein- und Ausschalten oder Verstellen von Dosierorganen oder zur Erfassung von Sensordaten sowie zum Schalten oder Regeln elektrischer Verbraucher oder stromführender Leitungen zum Betreiben elektrischer Elemente zugeordnet. Die mehreren Steuereinheiten können über einen Bus mit einem Steuerrechner oder einer Zentraleinheit verbunden sein. Zugleich kann jedes Stellglied über elektrische Verbindungen direkt mit einer der Steuereinheiten verbunden sein. Wahlweise können die Stellglieder auch über ein weiteres Bus-System mit der Steuereinheit verbunden sein, wobei es sich bei diesem Bus-System um ein CAN-Bus-System handeln kann.

Aus dem Stand der Technik sind somit bereits diverse landwirtschaftliche Maschinen bekannt, welche über ein CAN-Bus-System verfügen und mittels derer eine definierte Anordnung bzw. definierte Reihenfolge der Ansteuerung von einzelnen Stellgliedern, Sensoren oder dergl. erreicht wird. Die bekannten CAN-Bus-Systeme besitzen hierbei in der Regel eine Linienstruktur, an deren Ende in der Regel ein Endwiderstand angebracht ist, welcher für eine einwandfreie Funktion des CAN-Bus-Systems erforderlich ist, wobei derartige Systeme bzw. derartige Linienstrukturen auch als "Daisy Chain" bezeichnet werden.

Die aus dem Stand der Technik bekannt gewordenen "Daisy Chain"-Systeme weisen jedoch den Nachteil auf, dass eine Adressierung der einzelnen Steuereinheiten durch die reihenweise Weiterschaltung in der Regel sehr langsam erfolgt, wodurch derartige Systeme für schnelle Schaltvorgänge, insbesondere für sog. Section-Control-Anwendungen, während des Betriebs mitunter nur bedingt verwendet werden können. Dieser verlangsamende Effekt verstärkt sich darüber hinaus durch die einseitige Einspeisung von Nachrichten und Signalen. Insbesondere hat sich in der Praxis gezeigt, dass eine Kommunikation des CAN-Bus-Systems während des Betriebs von Maschinen mit großer Arbeitsbreite in der Regel zu langsam ist.

Darüber hinaus weisen die bekannten "Daisy Chain"-Systeme den Nachteil auf, dass bei einer Unterbrechung der "Daisy Chain" an einer beliebigen Stelle die nachfolgenden Steuereinheiten bzw. Steuergeräte nicht mehr erreicht werden. Hierdurch kann es zu einem völligen Ausfall des CAN-Bus-Systems kommen, insbesondere da der am Ende der "Daisy Chain" angeordnete und für die einwandfreie Funktion erforderliche Endwiderstand nicht mehr erreicht wird bzw. nicht mehr vorhanden ist. Mögliche Ursachen hierfür, wie bspw. eine fehlerhafte Bus-Ansteuerung, sowie ob nach einer Unterbrechungsstelle noch weitere Probleme bzgl. der Steuergeräte an der landwirtschaftlichen Maschine vorhanden sind, sind nicht feststellbar oder vom System diagnostizierbar. Ebenso sind eine Fehlerlokalisierung bzw. eine Maschinendiagnose sowie eine Weiterbetrieb der Maschine nicht möglich, wodurch auch eine schnelle Fehlerbehebung in der Regel nicht möglich ist.

Neben einem CAN-Bus-System benötigen landwirtschaftliche Maschinen zum Betreiben der Funktionseinheiten in der Regel noch ein Spannungsversorgungssystem, wobei dieses in einem CAN-Bus-System integriert sein kann, oder wobei dieses wahlweise auch von diesem losgelöst bzw. auch ohne CAN-Bus-System vorhanden sein kann. Auch diese Spannungsversorgungssysteme sind in der Regel als Linienstruktur aufgebaut, wobei auch bei diesen durch bspw. einen Kabelbruch an einer beliebigen Stelle der Linienstruktur ebenfalls die Spannungsversorgung im gesamten System ausfallen kann und somit wiederum ein Weiterbetreiben der Maschine nicht möglich ist. Darüber hinaus ist somit ebenfalls eine Maschinendiagnose nicht möglich, da die jeweilige defekte Stelle nicht lokalisiert werden kann.

Um dies zu verbessern, sind bereits Spannungsversorgungssysteme bzw. CAN-Bus-Systeme mit einem zusätzlichen redundanten System bekannt. Ein derartiges System mit einem redundanten CAN-Bus-System geht bspw. aus der EP 0 864 457 B1 hervor. Derartige redundante Systeme sind jedoch aufgrund des in der Regel erforderlichen doppelten Aufbaus des Systems sehr aufwendig und teuer und benötigen zudem viel Bauraum. Darüber hinaus können derartige redundante System nur eingesetzt werden, wenn keine exakte Positionierung von Steuergeräten an der landwirtschaftlichen Maschine benötigt wird, da die redundanten Systeme jeweils für sich arbeiten und jeweils eine "eigenständige" Adressierung durchführen. Somit sind derartige redundante Systeme insbesondere bei Pflanzenschutzspriten, Sämaschinen, Einzelkornmaschinen oder dergl. nur bedingt einsetzbar.

Ein weiteres redundantes System bzw. ein redundanter CAN-Datenbus geht aus der DE 103 24 724 A1 hervor, welcher redundante CAN-Datenbus in Form eines an einer Stelle offenen CAN-Datenbus-Rings für "n" Geräte ausgebildet ist. Der Datenbus-Ring besteht aus "n" zwischen den Geräten angeordneten CAN-Datenbus-Segmenten, die über in den Geräten vorgesehene Schaltmittel zum Datenbus zuschaltbar oder aus ihm heraus schaltbar ausgeführt sind. Im Betrieb wird ein aktiver Datenbus benutzt, bei welchem die Geräte über eine Kette von "n-1" der "n" CAN-Datenbus-Segmente miteinander verbunden sind. Das nicht benutzte CAN-Datenbus-Segment stellt ein Redundanz-Datenbus-Segment dar, welches bei Ausfall eines der "n-1" CAN-Datenbus-Segmente als Ersatz zur verbleibenden Kette der Datenbus-Segmente hinzuschaltbar ist.

Durch die DE 103 10 302 B4 ist ein Initialisierungsverfahren für eine ringförmige Datenbusanordnung, insbesondere eines Bremssystems eines Fahrzeuges bekannt, bei welchem Defekte an den Versorgungsleitungen der Teilnehmer berücksichtigt werden. Die Ringstruktur umfasst Versorgungsleitungen zur Stromversorgung der Teilnehmer, wobei in wenigstens einer Versorgungsleitung zwei zentrale Versorgungsschaltglieder angeordnet sind. Für zumindest einige der Teilnehmer ist zugleich je ein lokales Versorgungsschaltglied vorgesehen. Bei Zuschaltung eines Datenbusabschnittes und des jeweiligen Versorgungsabschnittes und Teilnehmers erfolgt zunächst eine Überprüfung auf Vorhandensein bzw. nicht Vorhandensein eines Fehlers. Je nach Prüfergebnis werden weitere Schritte eingeleitet.

Aus der WO 2013/103937 A1 ist ein Bus-System zum Überwachen und Erkennen von Fehlern bei einer für landwirtschaftliche Zwecke eingesetzten Vorrichtung bekannt. Das System umfasst mehrere Module, die jeweils mehrere Sensoren umfassen, die als Schleife miteinander verbunden sind. Die den einzelnen Modulen zugeordneten Schleifen sind wiederum in einer Linienstruktur bzw. als "daisy-chain configuration" miteinander verbunden.

Derartige Systeme haben sich jedoch hinsichtlich ihres komplexen und kostspieligen Aufbaus als nachteilig erwiesen, so dass diese in landwirtschaftlichen Maschinen eher weniger bzw. nicht eingesetzt werden.

Der Erfindung liegt die Aufgabe zugrunde, eine landwirtschaftliche Maschine zu realisieren und/oder ein Verfahren zum Betrieb einer landwirtschaftlichen Maschine zu liefern, mit deren Hilfe eine vereinfachte Maschinendiagnose ermöglicht sowie die Ausfallsicherheit erhöht wird, ohne hierfür ein zusätzliches redundantes System zu benötigen. Diese Ziele der Erfindung werden durch eine landwirtschaftliche Maschine mit den Merkmalen des unabhängigen Anspruchs 1 bzw. durch ein Verfahren mit den Merkmalen des unabhängigen Verfahrensanspruchs 9 erreicht, wobei weitere vorteilhafte Ausgestaltungen und Weiterbildungen der Erfindung aus den jeweiligen abhängigen Ansprüchen hervorgehen.

Zur Erreichung des genannten Ziels schlägt die Erfindung eine landwirtschaftliche Maschine, insbesondere eine landwirtschaftliche Verteilmaschine wie bspw. eine Pflanzenschutzspritze, eine Sämaschine, eine Einzelkornmaschine, einen Düngerstreuer oder dergl. vor, mittels welchen jeweils eine Verteilung von Saatgut, Dünger, Pflanzenschutzmittel oder dergl. auf einer landwirtschaftlichen Fläche erfolgen kann. Die Maschinen weisen jeweils wenigstens zwei Funktionseinheiten wie bspw. Reiheneinheiten, Düseneinheiten oder dergl. auf, mittels welchen jeweils das zu verteilende Verteilgut verteilt wird oder mittels welchen Funktionseinheiten jeweils die erforderliche Arbeit ausgeführt wird. Solche Funktionseinheiten können auch als Baugruppen aufgefasst oder bezeichnet werden, wobei normalerweise jeweils eine größere Anzahl gleichartiger Baugruppen vorhanden sein kann, wie dies bspw. bei Sämaschinen mit größerer Arbeitsbreite und entsprechender Anzahl von Säaggregaten, sog. Reiheneinheiten oder Ausbringeinheiten der Fall ist.

Der Maschine sind bspw. wenigstens ein Hauptsteuergerät und/oder eine Spannungsversorgungseinheit zugeordnet, wobei die Spannungsversorgungseinheit auch Teil des Hauptsteuergeräts sein kann, und wobei die Spannungsversorgung auch durch das Hauptsteuergerät erfolgen kann oder wobei das Hauptsteuergerät ebenfalls Teil des Spannungsversorgungssystems sein kann. Jeder Funktionseinheit ist ein vom Hauptsteuergerät angesteuertes bzw. durch dieses gesteuertes und/oder geregeltes elektrisches Steuergerät zugeordnet. Dieses elektrische Steuergerät dient jeweils dem Ein- und Ausschalten und/oder Verstellen von Dosierorganen und/oder von Stellelementen und/oder der Erfassung von Sensordaten und/oder dem Schalten, Steuern und/oder Regeln von elektrischen Verbrauchern und/oder dem Schalten und/oder Steuern und/oder Regeln von stromführenden Leitungen zum Betreiben von elektrischen Elementen. Die Verbindung bzw. die Kommunikation zwischen dem Hauptsteuergerät und/oder der Spannungsversorgungseinheit und den wenigstens zwei elektrischen Steuergeräten bzw. zwischen den wenigstens zwei Steuergeräten erfolgt jeweils über ein CAN-Bus-System bzw. über ein Spannungsversorgungssystem. Um eine vereinfachte Maschinendiagnose ohne redundantes System zu erreichen, ist erfindungsgemäß vorgesehen, dass die CAN-Bus-Leitung und/oder die Spannungsversorgungsleitung als Ringleitung ausgeführt ist, wobei sich die Ringleitung aus einer Mehrzahl von Verbindungsleitungen zusammensetzt und vom Hauptsteuergerät und/oder von der Spannungsversorgungseinheit jeweils eine zweiseitige Einspeisung von Signalen und/oder Nachrichten in Richtung der wenigstens zwei Steuergeräte erfolgt.

Infolge einer CAN-Bus-Topologie bzw. eines Spannungsversorgungssystems bzw. durch eine "Daisy Chain" wird es ermöglicht, Ausfälle von einzelnen Funktionseinheiten oder von Steuergeräten oder von Leitungsbrüchen zu erkennen, zu diagnostizieren und/oder zu lokalisieren, welche Funktionseinheit bzw. welche Reiheneinheit oder Düseneinheit bzw. welches Steuergerät und/oder welche Stelle in der Daisy Chain konkret betroffen ist. Die Identifikation des Defekts, bspw. eines Verbindungskabels zwischen zwei Steuergeräten, bzw. eines Steuergerätes selbst, führt dazu, dass die übrigen funktionsfähigen Funktionseinheiten weiter genutzt werden können und nicht wie bisher üblich alles Funktionseinheiten ab der defekten Stelle ohne Funktion bleiben, da diese bisher über eine CAN-Bus-Leitung und durch dazugehörige Stichleitungen ohne Redundanz und Möglichkeit zur Maschinendiagnose bzw. Fehlerdiagnose verbunden wurden.

Gegenüber den bislang als Linienstruktur ausgeführten CAN-Bus-Systemen und/oder Spannungsversorgungssystemen mit einer einseitigen Signal- und NachrichtenEinspeisung sowie in der Regel nur einem einseitigen Endwiderstand sieht die Erfindung eine zweiseitige Eispeisung von Signalen und Nachrichten, beginnend vom Hauptsteuergerät und/oder von der Spannungsversorgungseinheit in das CAN-Bus-System bzw. in das Spannungsversorgungssystem vor, was insbesondere durch eine als Ringleitung ausgeführte CAN-Bus-Leitung bzw. Spannungsversorgungsleitung erreicht wird, wodurch bspw. bei einem Leitungsbruch bzw. einer Fehlstelle zwischen zwei Steuergeräten jeweils noch eine Ansteuerung bzw. eine Spannungsversorgung von einer der defekten Stelle abgewandten Seite erfolgen kann.

Es sei darauf hingewiesen, dass die Ringleitung sich in Verbindung mit dem Hauptsteuergerät ergeben kann. So ist es denkbar, dass die Ringleitung im Bereich der Steuergeräte vorliegt, jedoch diese Ringleitung durch das Hauptsteuergerät bzw. die Spannungsversorgungseinheit unterbrochen ist, wobei bei einer derartigen Unterbrechung der Ringleitung, insbesondere des CAN-Bus-Systems, dem Hauptsteuergerät wiederum entsprechende Abschluss- bzw. Endwiderstände zugeordnet sein können.

Die Daisy Chain sieht darüber hinaus vor, dass diese in eine Mehrzahl, entsprechend der Anzahl an vorhandenen Steuergeräten bzw. Funktionseinheiten, von einzelnen in sich funktionsfähigen CAN-Bus-Systemen aufgeteilt wird, wobei die sich somit ergebende Mehrzahl von einzelnen CAN-Bus-Systemen wiederum mittels eines Hardware-Gateways zu einem gesamten CAN-Bus-System verbunden wird. Das somit entstehende CAN-Bus-System bzw. die somit entstehende Daisy Chain kann dadurch theoretisch unendlich verlängert werden, da die jeweiligen CAN-Bus-Leitungen bzw. Verbindungsleitungen zwischen zwei Steuergeräten bzw. zwischen einem Steuergerät und dem Hauptsteuergerät nur noch eine Länge von einem Steuergerät zum nächsten bzw. nur eine Länge von einem Steuergerät zum Hauptsteuergerät aufweisen. Eine derartige theoretisch unendliche Verlängerung des CAN-Bus-Systems war bislang durch die aus dem Stand der Technik bekannt gewordenen Systeme nicht möglich, da deren Länge jeweils begrenzt ist. Infolge des vorhandenen CAN-Bus-Systems bzw. der vorhanden Daisy Chain können somit auch landwirtschaftliche Maschinen mit einer großen Arbeitsbreite und einer Vielzahl von bspw. zwölf oder mehr Funktionseinheiten realisiert werden. Insbesondere kann durch die Daisy Chain auf Repeater oder dergl. Signalverstärkungsmittel gänzlich verzichtet werden.

Die Erfindung kann gemäß einer sinnvollen Option weiterhin vorsehen, dass die Ringleitung des CAN-Bus-Systems und/oder des Spannungsversorgungssystems durch eine Mehrzahl von Verbindungsleitungen gebildet wird, wobei die Anzahl an Verbindungsleitungen sich insbesondere aus der Summe von vorhandenen Steuergeräten und den vorhandenen Hauptsteuergeräten + 1 ergibt. Somit erfolgt die Verbindung zwischen dem Hauptsteuergerät und den Steuergeräten bzw. zwischen den Steuergeräten nicht über eine einzige Ringleitung in Form einer CAN-Bus-Leitung und/oder einer Spannungsversorgungsleitung, sondern es erfolgt gemäß der Option der Erfindung jeweils nur eine Verbindung mit dem direkten örtlichen Nachbarn. Dadurch entstehen letztlich viele kleine, in sich funktionierende CAN-Bus-Systeme, welche in sich stabil sind, da die einzelnen Verbindungsleitungen vergleichsweise sehr kurz ausgeführt werden können. Dagegen werden bei klassischen CAN-Bus-Systemen bzw. bei klassischen Daisy Chain-Systemen die Leitungen jeweils entlang des gesamten Systems gelegt.

Um eine ausreichende Geschwindigkeit bei der Adressierung bzw. der Ansteuerung der Steuergeräte zu erreichen, können diese sinnvollerweise jeweils über ein Hardware-Gateway verbunden sein, bzw. kann ein derartiges Hardware-Gateway auf den Steuergeräten angeordnet sein, dass somit als CAN-Bus-Schnittstelle dienen kann. Derartige Hardware-Gateways weisen im Gegensatz zu einer Software-Lösung eine ausreichend schnelle Weitergabe der CAN-Nachrichten bzw. der CAN-Signale auf. Zusätzlich wird somit ein auf den Steuergeräten vorhandener Prozessor nicht belastet. Dies kann durch folgenden mathematischen Zusammenhang nochmals verdeutlicht werden. Besitzt bspw. eine landwirtschaftliche Maschine 36 Funktionseinheiten, welche jeweils durch ein Softwaregateway angesteuert werden, und benötigt jede dieser Funktionseinheiten bspw. eine Verarbeitungszeit in einer Größenordnung von etwa zehn Millisekunden (10ms) bis zur Antwort und Weiterleitung des Signals, so ergibt sich eine Zeitverzögerung bis zur äußersten Funktionseinheit von insgesamt etwa 360 Millisekunden. Wird dies auf eine Fahrgeschwindigkeit der landwirtschaftlichen Maschine von bspw. 15km/h umgerechnet, ergibt sich eine typische Abstandsdifferenz von etwa 150 Zentimetern zwischen der ersten Funktionseinheit bis zur letzten Funktionseinheit. Diese Zeitdifferenz bzw. Abstandsdifferenz ist insbesondere bei sog. Section-Control-Anwendungen nicht akzeptabel, wodurch wiederum die Zeit zwischen einer Antwort und einer Weiterleitung des Signals von einer Funktionseinheit so gering wie möglich erfolgen soll. Durch eine Ausführung als Hardware-Gateway lässt sich die Zeit zwischen Antwort und Weiterleitung wesentlich verringern, bspw. auf nur noch etwa eine Millisekunde (oder innerhalb dieser Größenordnung), wodurch die Abstandsdifferenz nur noch 15 cm beträgt, was somit auch für ein Section Control System ausreichend ist. So können die Signalverarbeitungs- bzw. Ansteuerungszeiten durch Hardware-Gateways um den Faktor 10 verringert werden.

Kommt es zu einem Fehler in einem der Steuergeräte oder in einer der Verbindungsleitungen des CAN-Bus-Systems und/oder im Spannungsversorgungssystem, kann dieser Fehler bzw. diese Fehlstelle dadurch lokalisiert werden, dass von beiden Seiten, aus Sicht des Hauptsteuergeräts bzw. der Spannungsversorgungseinheit, Signale bzw. Nachrichten zu den Steuergeräten einspeist und somit die Fehlstelle eingegrenzt werden können. Mittels eines Signals oder mittels einer Anzeigevorrichtung bzw. mittels einer CAN-Nachricht vom Hauptsteuergerät kann nun einer Bedienperson angezeigt werden, welches Steuergerät bzw. welche Verbindungsleitung an der landwirtschaftlichen Maschine ausgefallen ist bzw. nicht mehr funktioniert. Darüber hinaus kann durch das erfindungsgemäße System beiderseits der Fehlstelle mit den funktionsfähigen Steuergeräten weiter gearbeitet werden, da alle Steuergeräte nach wie vor adressierbar sind bzw. mit Spannung versorgt werden, entweder von der einen oder der anderen Seite des Hauptsteuergerätes bzw. der Spannungsversorgungseinheit aus.

Die eine Ringleitung bildenden Verbindungsleitungen können bspw. in einem sechspoligen Kabel zusammengefasst sein, wobei hierbei wiederum einige Kabel als sog. Twisted-Pair Leitungen ausgeführt sein können. So wäre eine Aufteilung bspw. wie folgt möglich:

CAN - L = CAN Low = CAN Signalleitung

CAN - H = CAH High = CAN Signalleitung

CAN – EN = CAN Enable = CAN Adressleitung

CAN – GND = CAN Ground

Dabei sind wiederum bspw. Die CAN-L- und die CAN-H-Leitung jeweils als Twisted-Pair Kabel ausgeführt, und bspw. die CAN-EN- und die CAN-GND-Leitung jeweils als Twisted-Pair Kabel ausgeführt. Parallel zu diesen können noch bspw. zwei Adern verlegt sein, welche als Spannungsversorgungsleitungen bspw. für Spannungswerte 0V und +12V dienen. Ebenso wären jedoch auch beliebige andere Ausgestaltungen der Verbindungsleitungen möglich bzw. denkbar.

Die CAN-EN-Leitung kann im Falle einer Funktionsstörung insbesondere zur Diagnose verwendet werden, was dadurch erreicht werden kann, indem bspw. ein Testsignal vom Hauptsteuergerät initiiert wird und dann sequentiell an alle Steuergeräte weitergegeben wird, bis zum Hauptsteuergerät und wieder zurück, wobei dies durch die Verbindung mittels Hardware-Gateways sowie durch die zweiseitige Einspeisung innerhalb kürzester Zeit erfolgen kann. Im Fehlerfall ist dann in weiterer Folge eine Lokalisierung bzw. eine Maschinendiagnose des Fehlers, entweder in einem der Steuergeräte oder in einer der Verbindungsleitungen gegeben, da durch die sequentielle Weiterschaltung jeweils eine Auswertung erfolgt, bis zu welchem Steuergerät ein fehlerfreie Weiterschaltung möglich ist.

Da erfindungsgemäß bzw. gemäß einer erfindungsgemäßen Option die CAN-Bus-Verbindungen jeweils nur aus zwei Steuergeräten bzw. aus Steuergerät und Hauptsteuergerät bestehen, lässt sich bei Störungen der beiden CAN-Signalleitungen (CAN-H & CAN-L) immer ein genauer Rückschluss auf die fehlerhafte Stelle ziehen. Der Fehler befindet sich somit entweder im Steuergerät selbst oder in einer Verbindungsleitung. Diese Fehlererkennung erfolgt bspw. direkt mittels eines dem Steuergerät zugeordneten CAN-Controllers. Da die jeweiligen Steuergeräte durch ein vorzugsweise als Hardware-Gateway ausgeführtes Gateway getrennt sind, welches nur gültige CAN-Signale weitergibt, sind weitere Steuergeräte von Störungen nicht betroffen. Die Störung oder Fehlstelle kann somit aufgrund der beidseitigen Anbindung an das Hauptsteuergerät gemeldet werden und von diesem bspw. mittels einer Anzeigevorrichtung einer Bedienperson angezeigt werden. Abgesehen von der Fehlstelle bleibt die Funktionseinheit voll funktionsfähig, was gegenüber den aus dem Stand der Technik bekannten Systemen eine wesentliche Verbesserung darstellt, bei welchem alle Steuergeräte an eine einzige CAN-Bus-Leitung bzw. Spannungsversorgungsleitung angeschlossen sind.

Neben der CAN-Bus-Leitung kann ebenso eine den Steuergeräten zugeordnete Spannungsversorgungsleitung als Ringleitung ausgeführt sein und ebenso bspw. von beiden Seiten aus beginnend vom Hauptsteuergerät die jeweiligen Steuergeräte mit Spannung versorgen. Dies bedeutet, dass eine Unterbrechung dieser Leitung keine Funktionsstörung der Maschine darstellt oder auslösen kann, d.h. die somit entstehende Topologie stellt hinsichtlich der Unterbrechung der Spannungsversorgung eine Redundanz dar. Erst dann, wenn es zu einer zweiten Unterbrechung dieser Leitung im Betrieb kommt, ist eine Funktion der dazwischen liegenden Funktionseinheiten nicht mehr gegeben. Die Spannungsversorgungsleitung kann darüber hinaus ebenfalls wie die CAN-Bus-Leitung in das Twisted-Pair-Kabel mit integriert sein. Darüber hinaus sei darauf hingewiesen, dass die erfindungsgemäße Ausführung der Spannungsversorgung als Ringleitung auch bei landwirtschaftlichen Maschinen ohne ein CAN-Bus-System zum Einsatz kommen kann. Ebenso denkbar wäre darüber hinaus eine andere Spannungs- bzw. Stromquelle als ein Hauptsteuergerät, wobei die Funktion jeweils identisch ist, wobei auch in dieser Ausführungsform das Hauptsteuergerät in die Ringleitung des Spannungsversorgungssystems mit integriert sein kann.

Das Hauptsteuergerät dient bspw. als Spannungsversorgungseinheit bzw. als Stromquelle, welche eine konstante Spannung von bspw. +12V liefert und welche einen elektrischen Strom von bspw. +1,5A bereitstellt, bzw. ist diese bspw. so ausgelegt, dass von dieser bis zu 1,5A abgenommen werden können, wobei dieser Strom jeweils vom Hauptsteuergerät bzw. von der Spannungsversorgungseinheit aus beidseitig in Richtung der Steuergeräte eingespeist wird. Sind alle Steuergeräte gemeinsam verbunden, wird ein bestimmter Strom von jeder Seite des Hauptsteuergeräts bzw. von einer Spannungsversorgungseinheit abgenommen. Kommt es jedoch zu einem Leitungsbruch, bspw. zwischen zwei Steuergeräten, ändern sich die Stromabnahmen zwischen den beiden Seiten der Spannungsversorgungseinheit. Auf Basis eines entsprechenden Vergleichs zwischen Ist-Werten und Soll-Werten kann anschließend ermittelt werden, wie viele Verbraucher noch von der jeweiligen Seite der Spannungsversorgungseinheit versorgt werden. Aufgrund der Differenz der beiden Werte kann anschließend ermittelt werden, zwischen welchen Steuergeräten bzw. Funktionseinheiten bspw. ein Leitungsbruch vorliegt und somit die Maschinendiagnose wiederum wesentlich vereinfacht werden. Gegenüber den aus dem Stand der Technik bekannten Systemen bietet dies einen wesentlichen Vorteil, da selbst bei einem Leitungsbruch im Spannungsversorgungssystem alle Funktionseinheiten weiterhin funktionieren sowie der jeweilige Leitungsbruch genau lokalisiert werden kann. Bei den aus dem Stand der Technik bekannten Systemen kam es hingegen jeweils zu einem Ausfall aller Funktionseinheiten, ohne hier einen Hinweis auf die defekte Stelle zu erhalten.

Zur Lösung der oben genannten Aufgabe schlägt die vorliegende Erfindung weiterhin ein Verfahren zum Betreiben einer landwirtschaftlichen Maschine, insbesondere einer landwirtschaftlichen Verteilmaschine vor, die zumindest ein Hauptsteuergerät zum Steuern und Regeln von einer Mehrzahl von elektrischen Steuergeräten aufweist, welche jeweils einer Funktionseinheit der Maschine zugeordnet sind. Mittels der genannten Steuergeräte können jeweils verschiedenste Dosierorgane und/oder Stellelemente einund/oder ausgeschaltet und/oder verstellt werden. Wahlweise können damit auch Sensordaten erfasst werden. Zudem können mittels der genannten Steuergeräte jeweils elektrische Verbraucher geschaltet, ein- und/oder ausgeschaltet bzw. geregelt werden. Außerdem können damit wahlweise stromführende Leitungen geschaltet, ein- und/oder ausgeschaltet werden. Darüber hinaus können mittels der genannten Steuergeräte jeweils verschiedenste elektrische Elemente betrieben werden. Bei allen diesen genannten Optionen sind die elektrischen und/oder signaltechnischen Verbindungen zwischen dem Hauptsteuergerät und der Mehrzahl von Steuergeräten durch ein CAN-Bus- System und/oder durch ein Spannungsversorgungssystem gebildet. Das Verfahren sieht zudem vor, dass die elektrischen und/oder signaltechnischen Verbindungen des CAN-Bus-Systems und/oder des Spannungsversorgungssystems als Ringleitung ausgeführt ist/sind. Dabei ist weiterhin vorgesehen, dass sich diese Ringleitung aus einer Mehrzahl von Verbindungsleitungen zusammensetzt, wobei jeweils eine zweiseitige Einspeisung von Signalen und/oder Nachrichten vom Hauptsteuergerät und/oder von der Spannungsversorgungseinheit in Richtung zu den Steuergeräten bzw. der Mehrzahl von Steuergeräten erfolgt.

Eine Variante des erfindungsgemäßen Verfahrens kann vorsehen, dass das CAN-Bus-System in eine Mehrzahl, entsprechend der Anzahl an vorhandenen Steuergeräten von einzelnen in sich funktionsfähigen CAN-Bus-Systemen aufgeteilt wird.

Zudem kann wahlweise vorgesehen sein, dass die einzelnen in sich funktionsfähigen CAN-Bus-Systeme mittels eines Hardware-Gateways verbunden werden und/oder miteinander kommunizieren.

Das Verfahren kann außerdem dadurch gekennzeichnet sein, dass zur Maschinendiagnose ein Testsignal vom Hauptsteuergerät zweiseitig initiiert wird und anschließend sequentiell an alle Steuergeräte weitergegeben wird, und wieder zurück.

Weiterhin kann bei dem Verfahren jedem Steuergerät zumindest ein Widerstand zugeordnet sein. Wahlweise kann dieser Widerstand auch in das Hardware-Gateway integriert sein. Alternativ hierzu könnte das Hardware-Gateway auch derartig ausgeführt sein, dass kein solcher Widerstand benötigt wird.

Schließlich kann das Verfahren auch vorsehen, dass das Spannungsversorgungssystem bei einem Leitungsbruch einen Vergleich zwischen Ist-Werten und Soll-Werten durchführt, auf dessen Basis ermittelt wird, wie viele Steuergeräte von welcher Seite der zweiseitigen Anbindung an eine Spannungsversorgungseinheit und/oder ein Hauptsteuergerät versorgt werden.

Alle diese oben erwähnten Verfahrensvarianten und Aspekte, die im Zusammen mit dem erfindungsgemäßen Verfahren oder einer seiner Ausführungsvarianten genannt wurden, sollen auch als im Zusammenhang mit der erfindungsgemäßen landwirtschaftlichen Maschine oder einer ihrer Ausführungsvarianten offenbart gelten. Wenn daher ein Merkmal oder Aspekt im Zusammenhang mit dem Verfahren genannt oder offenbart ist, so kann dieser Aspekt oder Zusammenhang ebenso mit einer der Ausführungsvarianten der landwirtschaftlichen Maschine kombiniert werden. Gleiches gilt auch umgekehrt. Wenn also ein Merkmal oder Aspekt im Zusammenhang mit der erfindungsgemäßen landwirtschaftlichen Maschine genannt oder offenbart ist, so kann dieser Aspekt oder Zusammenhang ebenso mit einer der Ausführungsvarianten des Verfahrens kombiniert werden.

Es sei noch darauf hingewiesen, dass das erfindungsgemäße CAN-Bus-System bzw. Spannungsversorgungssystem bei jeglichen landwirtschaftlichen Maschinen mit einer Mehrzahl von elektrisch betriebenen Funktionseinheiten verwendet werden kann bspw. auch bei Traktoren, Erntemaschinen oder dergl. Gleiches gilt auch für das erfindungsgemäße Verfahren zum Betrieb einer solchen landwirtschaftlichen Maschine.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

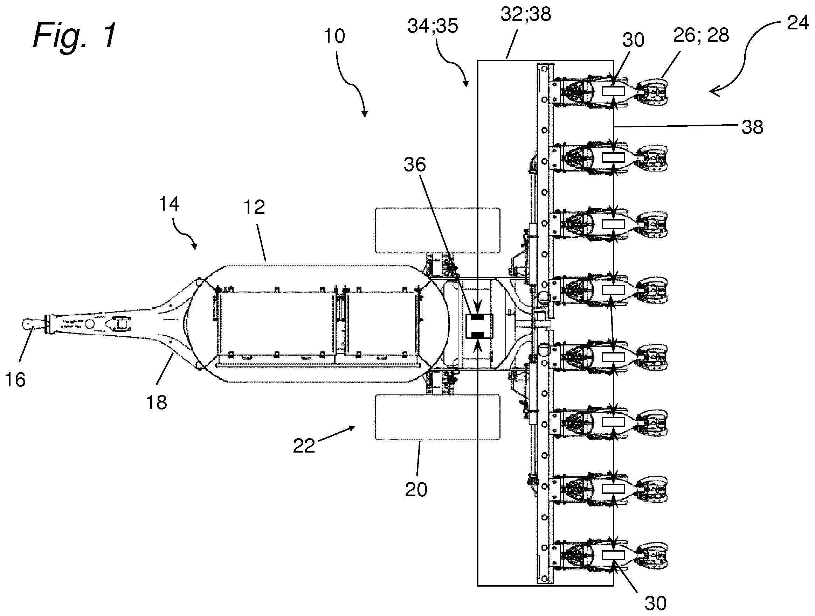

Fig. 1 zeigt eine Draufsicht einer als eine Einzelkornmaschine ausgeführten landwirtschaftlichen Maschine mit einer Mehrzahl von angebrachten Funktionseinheiten.

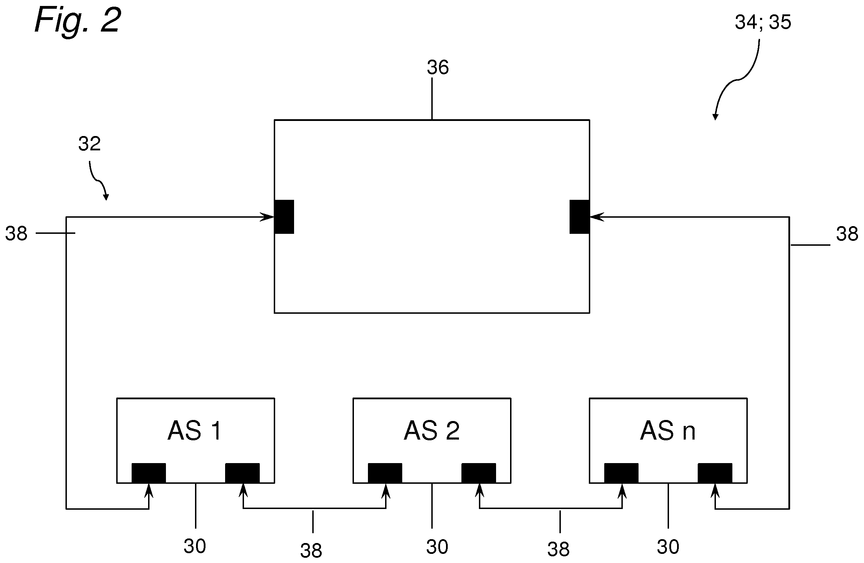

Fig. 2 zeigt eine schematische Ansicht eines CAN-Bus-Systems und/oder eines Spannungsversorgungssystems mit einem Hauptsteuergerät bzw. einer Spannungsversorgungseinheit und drei Steuergeräten, wobei diese jeweils mit einer sich aus einer Mehrzahl an Verbindungsleitungen zusammengesetzten Ringleitung verbunden sind.

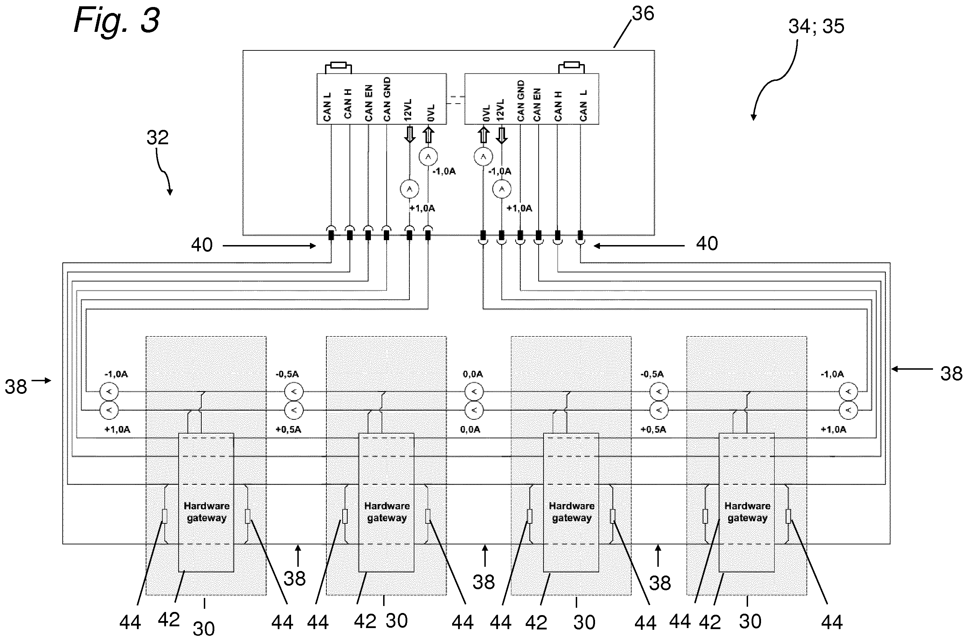

Fig. 3 zeigt einen Funktionsplan eines CAN-Bus-Systems bzw. eines Spannungsversorgungssystems mit einem Hauptsteuergerät sowie vier Steuergeräten, wobei diese jeweils mit einer sich aus einer Mehrzahl an Verbindungsleitungen zusammengesetzten Ringleitung verbunden sind.

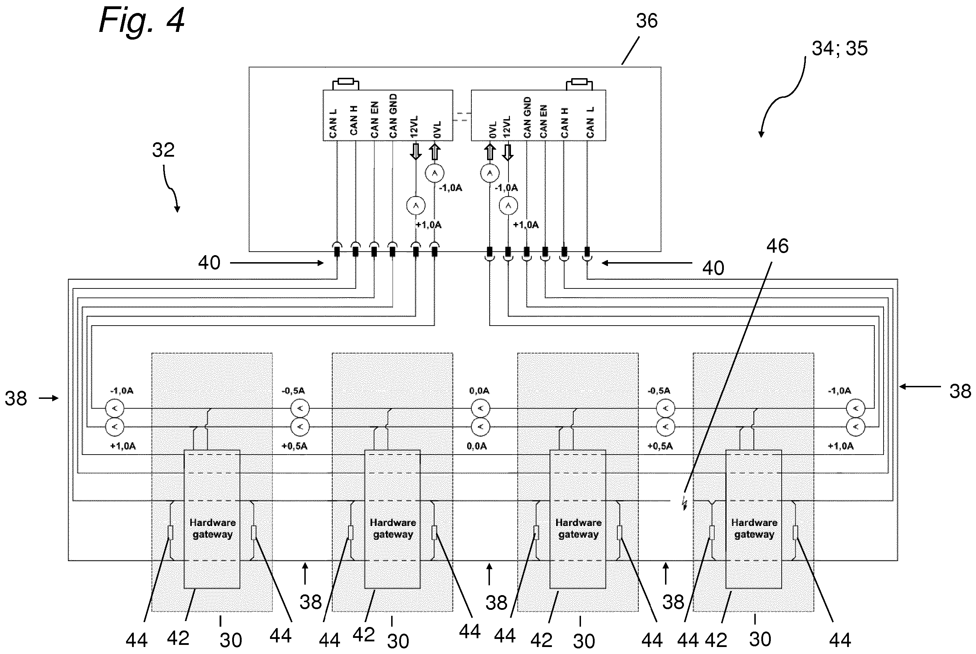

Fig. 4 zeigt einen Funktionsplan eines CAN-Bus-Systems bzw. eines Spannungsversorgungssystems mit einem Hauptsteuergerät sowie vier Steuergeräten, wobei diese jeweils mit einer sich aus einer Mehrzahl an Verbindungsleitungen zusammengesetzten Ringleitung verbunden sind und wobei zwischen zwei Steuergeräten eine Fehlstelle in der CAN-H-Leitung vorhanden ist.

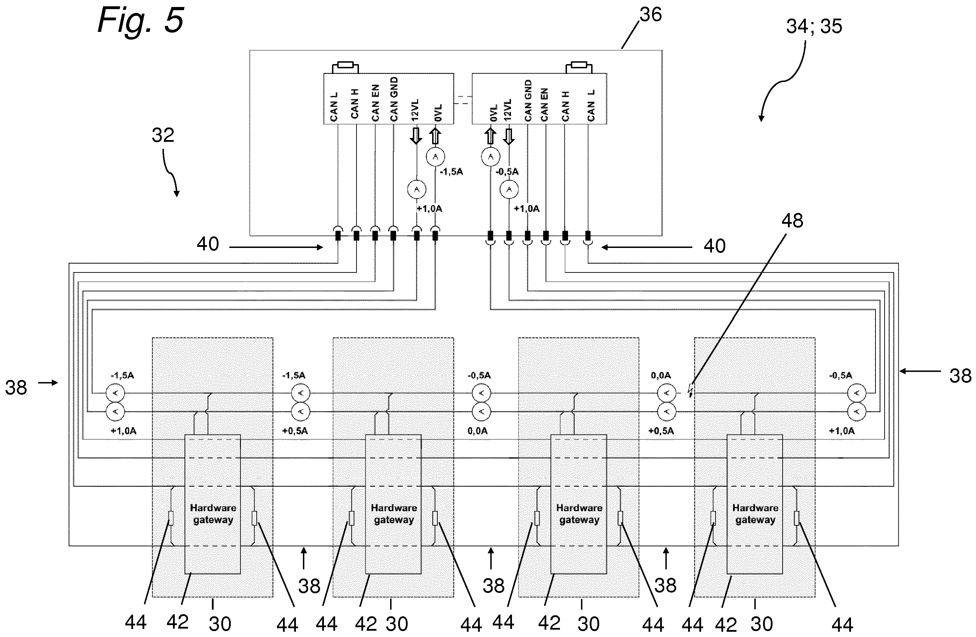

Fig. 5 zeigt einen Funktionsplan eines CAN-Bus-Systems bzw. eines Spannungsversorgungssystems mit einem Hauptsteuergerät sowie vier Steuergeräten, wobei diese jeweils mit einer sich aus einer Mehrzahl an Verbindungsleitungen zusammengesetzten Ringleitung verbunden sind und wobei zwischen zwei Steuergeräten ein Leitungsbruch in der Spannungsversorgungsleitung vorhanden ist.

Für gleiche oder gleich wirkende Elemente der Erfindung werden in den Figuren 1 bis 5 jeweils identische Bezugszeichen verwendet. Ferner werden der Übersicht halber teilweise nur solche Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße landwirtschaftliche Maschine ausgestaltet sein kann und stellen keine abschließende Begrenzung dar.

Eine Ausführungsvariante einer landwirtschaftlichen Maschine 10 geht aus der Fig. 1 hervor, wobei diese als Einzelkornmaschine ausgeführt ist. Die Maschine 10 weist einen Vorratsbehälter 12 zum Mitführen und Bereitstellen von landwirtschaftlichem Verteilgut auf. Der Vorratsbehälter 12 ist auf einem Trägerfahrzeug 14 montiert, welches Trägerfahrzeug 14 sich im Wesentlichen aus einer Zugdeichsel 16 zur Verbindung der landwirtschaftlichen Maschine 10 mit einem hier nicht dargestellten Zugfahrzeug, einem Rahmen 18 und einem mit Rädern 20 versehenen Fahrwerk 22 zusammensetzt. Am hinteren Ende ist dem Trägerfahrzeug 14 bzw. der landwirtschaftlichen Maschine 10 eine Scharschiene 24 mit einer Mehrzahl von in regelmäßigen Abständen daran angebrachten Funktionseinheiten 26 in Form von Reiheneinheiten 28 zugeordnet.

Mittels der Reiheneinheiten 28 erfolgt in der Regel jeweils eine Verteilung des auszubringenden landwirtschaftlichen Verteilguts, wobei den Reiheneinheiten 28 hierfür jeweils ein elektrisches Steuergerät 30 zugeordnet ist, mittels welchem die für eine gewünschte Verteilung benötigten Dosierorgane und/oder Stellelemente ein- und ausgeschaltet und/oder verstellt werden können und/oder mittels welchem jeweils Sensordaten erfasst werden können oder mittels denen jeweils elektrische Verbraucher geschaltet bzw. geregelt werden können und/oder mittels welchen jeweils stromführende Leitungen geschaltet werden können.

Die jeweils äußersten Steuergeräte 30 werden jeweils über ein CAN-Bus-System 34 und/oder ein Spannungsversorgungssystem 35 mit einem Hauptsteuergerät 36 verbunden. Dabei erfolgt die Verbindung jeweils mittels einer Mehrzahl von Verbindungsleitungen 38, welche wiederum eine Ringleitung 32 bilden. Ebenso werden die Steuergeräte 30 jeweils miteinander mittels einer Verbindungsleitung 38 gemeinsam verbunden, wobei die Verbindung der Steuergeräte 30 und der Hauptsteuergeräte 36 jeweils derartig erfolgt, dass mittels der Verbindungsleitung 38 jeweils nur der örtliche Nachbar verbunden wird. Wie die Pfeile in der Fig. 1 erkennen lassen, erfolgt beginnend vom Hauptsteuergerät 36 eine zweiseitige Einspeisung von Nachrichten und Signalen in Richtung der äußersten Steuergeräte 30 und von diesen jeweils eine zweiseitige Einspeisung in Richtung eines direkt benachbarten inneren Steuergeräts 30 und Hauptsteuergeräts 36.

Das in Fig. 1 dargestellte CAN-Bus-System 34 bzw. Spannungsversorgungssystem 35 geht nochmals aus der Fig. 2 hervor. Das Hauptsteuergerät 36 ist mit insgesamt drei Steuergeräten 30 bzw. CAN-Bus-Schnittstellen bzw. Funktionseinheiten 26 (AS1; AS2; ASn) ausgestattet, wobei zwei zur Kommunikation mit den Steuergeräten 30 direkt mit dem Hauptsteuergerät 36 verbunden werden. Somit wird im Gegensatz zu aus dem Stand der Technik bekannten CAN-Bus-Systemen, bei welchen die Kommunikation des Hauptsteuergeräts 36 mit den Steuergeräten 30 nur durch eine Schnittstelle möglich ist, eine Kommunikation innerhalb des CAN-Bus-Systems 34 von beiden Seiten mit den Steuergeräten 30 ermöglicht, was insbesondere durch die als Ringleitung 32 ausgeführten CAN-Bus-Leitungen erreicht wird, wobei die Ringleitung 32 hierzu eine Mehrzahl von Verbindungsleitungen 38 zwischen jeweils zwei Steuergeräten 30 oder zwischen dem Hauptsteuergerät 36 und einem Steuergerät 30 aufweist.

Es sei noch darauf hingewiesen, dass die Verbindungsleitungen 38 des Spannungsversorgungssystems 35 jedoch auch ohne Unterbrechung ausgeführt sind (vergl. Figuren 3, 4 und 5).

Einen Funktionsplan eines CAN-Bus-Systems 34 bzw. eines Spannungsversorgungssystems 35 mit einem Hauptsteuergerät 36 sowie vier Steuergeräten 30, wobei diese jeweils mit einer sich aus einer Mehrzahl an Verbindungsleitungen 38 zusammen gesetzten Ringleitung 32 verbunden sind, zeigen die Figuren 3, 4 und 5, wobei dieser in Fig. 3 ohne Fehlstelle, in Fig. 4 mit einer Fehlstelle 46 in der CAN-Bus-Leitung bzw. in einer Verbindungsleitung 38 zwischen zwei Steuergeräten 30 dargestellt ist, sowie in Fig. 5 mit einem Leitungsbruch 48 im Spannungsversorgungssystem 35 zwischen zwei Steuergeräten 30 bzw. Funktionseinheiten 26 dargestellt ist.

Das CAN-Bus-System 34 bzw. das Spannungsversorgungssystem 35 besitzt jeweils ein Hauptsteuergerät 36, in welchem zwei identische Versorgungs- bzw. Signalsysteme bereitgestellt werden. Dabei umfasst diese jeweils eine +12V Gleichstrom Spannungsversorgung, welche sich aus einer +12V und einer 0V Leitung zusammensetzt. Bei einem normalen Betrieb des CAN-Bus-Systems werden von dieser Spannungsversorgung +1A bzw. -1A abgegriffen bzw. bereitgestellt, die jeweilige Stromflussrichtung wird mittels Pfeilen jeweils dargestellt. Darüber hinaus stellt das Hauptsteuergerät 36 noch die für den CAN-Bus erforderlichen CAN-Bus-Leitungen bereit, welche CAN-GND; CAN-EN; CAN-H und CAN-L umfassen. Darüber hinaus besitzt das Hauptsteuergerät 36 zwei Schnittstellen 40 an welchen jeweils eine Verbindungsleitung 38, welche zu einem Steuergerät 30 führt angeschlossen werden kann. Somit erfolgt jeweils eine zweiseitige Signal- bzw. Nachrichteneinspeisung bzw. Spannungseinspeisung vom Hauptsteuergerät 36 in Richtung eines Steuergeräts 30. Die Verbindungsleitungen 38 sind zum besseren Verständnis jeweils als Einzeladern abgebildet. Diese könnten jedoch auch in einem Kabel zusammengefasst werden, wobei es sich bei einem derartigen Kabel bspw. um ein sog. Twisted-Pair-Kabel handeln kann. Ebenso weisen die Steuergeräte 30 jeweils Schnittstellen zur Verbindung mit den Verbindungsleitungen 38 auf, wobei auch diese Schnittstellen zur besseren Veranschaulichung nicht dargestellt sind.

Die auf den Steuergeräten 30 vorhandenen CAN-Schnittstellen sind jeweils in Form von Hardware-Gateways 42 ausgeführt. Dies weist den Vorteil auf, dass im Gegensatz zu einer Software-Lösung eine schnelle Weitergabe der CAN-Nachrichten an die jeweils andressierten Steuergeräte 30 innerhalb des CAN-Bus-Systems 34 erfolgt.

**EP 3 332 624 B1**

Neben den Hardware-Gateways 42 ist jeweils ein Widerstand 44 angeordnet, wobei diese auch im Hardware-Gateway 42 integriert sein könnten bzw. dass Hardware-Gateway 42 so ausgeführt sein könnte, dass dieser nicht benötigt wird. Dieser Widerstand 44 bildet bei bspw. einer Leitungsunterbrechung einer Verbindungsleitung 38 jeweils einen Abschlusswiderstand, so dass auch bei einer Fehlstelle 46 bzw. einem Leitungsbruch 48 ein geschlossenes CAN-Bus-System vorliegt, dies jedoch durch die zweiseitige Ansteuerung zu keinem Ausfall eines Steuergeräts 30 bzw. einer Funktionseinheit 26 zur Folge hat.

Wie es die Figuren 3, 4 und 5 erkennen lassen, ist die Ringleitung 32 über das Hautsteuergerät 36 in sich geschlossen, bzw. den CAN-H und CAN-L Ausgängen des Hauptsteuergeräts 36 sind jeweils Abschluss- bzw. Endwiderstände derartig zugeordnet, dass sich wiederum ein geschlossenes CAN-Bus-System ergibt.

Eine Fehlstelle 46 im CAN-Bus-System geht aus der Fig. 4 hervor, wobei hierbei eine Fehlstelle 46 in der CAN-H Leitung zwischen zwei Steuergeräten 30 dargestellt ist. Diese Fehlstelle 46 kann dadurch lokalisiert werden, dass man von beiden Seiten aus Sicht des Hauptsteuergeräts 36 Signale bzw. Nachrichten zu den Steuergeräten 30 einspeist und somit die Fehlstelle 46 eingegrenzt werden kann. Ein Signal bzw. eine CAN-Nachricht vom Hauptsteuergerät 36 kann nun einer Bedienperson anzeigen, welches Steuergerät 30 auf der landwirtschaftlichen Maschine 10 ausgefallen ist. Des Weiteren kann beiderseits der Fehlstelle 46 mit den funktionsfähigen Steuergeräten 30 weiter gearbeitet werden, da alle Steuergeräte 30 durch die zweiseitige Einspeisung sowie die in sich geschlossenen vielen kleinen CAN-Bus-Systeme nach wie vor adressierbar sind, entweder von der einen oder der anderen Seite des Hauptsteuergerätes 36.

Gegenüber den bislang als Linearsystemen ausgeführten CAN-Bus-Systemen 34 sieht die Erfindung eine zweiseitige Einspeisung von Signalen bzw. Nachrichten bzw. der Spannungsversorgung in das CAN-Bus-System 34 bzw. das Spannungsversorgungssystem 35 vor, was insbesondere durch eine Ringleitung 32, welche sich aus einer Mehrzahl von Verbindungsleitungen 38 zusammensetzt, erreicht wird. Durch eine derartige Ausgestaltung wird erreicht, dass bei einem Leitungsbruch 48 bzw. einer Fehlstelle 46 zwischen zwei Steuergeräten jeweils noch eine Ansteuerung des Steuergeräts 30 bzw. der Funktionseinheit 26 von der der defekten Stelle abgewandten Seiten erfolgen kann.

Die als Ringleitung 32 ausgeführte CAN-Bus-Leitung bzw. die einzelnen Verbindungsleitungen 38 können sich bspw. aus einer CAN-L; CAN-H; CAN-EN und einer CAN-GND Leitung zusammensetzen und bspw. als sog. Twisted-Pair-Kabel ausgeführt sein, wobei die CAN-EN Leitung im Falle einer Funktionsstörung zur Diagnose verwendet werden kann, indem ein Testsignal vom Hauptsteuergerät 36 initiiert und dann sequentiell an alle Steuergeräte weitergegeben wird bis zum Hauptsteuergerät 36 und wieder zurück. Im Fehlerfall ist dann in weiterer Folge eine Lokalisierung bzw. eine Maschinendiagnose des Fehlers, entweder in einem der Steuergeräte 30 und/oder einer Verbindungsleitung 38 gegeben.

Da die jeweiligen Steuergeräte 30 jeweils durch ein Hardware-Gateway getrennt sind, welches nur gültige Daten weitergibt, sind weitere Steuergeräte 30 von Störungen nicht betroffen und aufgrund der beidseitigen Anbindung kann die fehlerhafte Stelle an das Hauptsteuergerät 36 gemeldet werden. Abgesehen von der Fehlstelle 46 bzw. dem Leitungsbruch 48 bleibt die Funktionseinheit 26 voll funktionsfähig, was gegenüber den aus dem Stand der Technik bekannten Systemen eine wesentliche Verbesserung darstellt.

Die Fig. 5 zeigt darüber hinaus noch den identischen Funktionsplan gemäß der Figuren 3 und 4 jedoch mit einem Leitungsbruch 48 im Spannungsversorgungssystem 35 zwischen zwei Steuergeräten 30 bzw. Funktionseinheiten 26. Die Spannungsversorgungsleitung ist ebenso wie die CAN-BUS-Leitung als Ringleitung 32 ausgeführt, wobei auch diese sich aus einer Mehrzahl von Verbindungsleitungen 38 zusammensetzt. Vom Hauptsteuergerät 36 wird zweiseitig die jeweils identische Spannungsversorgung bereitgestellt bzw. es kann jeweils die gleiche Menge an Strom A vom Hauptsteuergerät 36 abgenommen werden. Kommt es zu einem Leitungsbruch 48 zwischen zwei Steuergeräten 30 erfolgt mittels einer Stromauswertung ein Vergleich zwischen der auf der linken Seite des Hauptsteuergeräts 36 abgenommenen Strommenge und der auf der rechten Seite des Hauptsteuergeräts 36 abgenommenen Strommenge. Auf Basis eines entsprechenden Ist-Wert & Soll-Wert Vergleichs kann dann jeweils ermittelt werden, wie viele Steuergeräte 30 noch von der linken Seite des Hauptsteuergeräts 36 versorgt werden und wie viele von der anderen Seite, wodurch ein Leitungsbruch 48 bspw. zwischen zwei Steuergeräten 30 eingegrenzt werden kann und somit wiederum die Maschinendiagnose entsprechend vereinfacht wird.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

**Bezugszeichenliste**

10     Landwirtschaftliche Maschine
12     Vorratsbehälter
14     Trägerfahrzeug
16     Zugdeichsel

| 18 | Rahmen |
|----|--------|
| 20 | Rad |
| 22 | Fahrwerk |
| 24 | Scharschiene |
| 26 | Funktionseinheit |
| 28 | Reiheneinheit |
| 30 | Steuergerät |
| 32 | Ringleitung |
| 34 | CAN-Bus-System |
| 35 | Spannungsversorgungssystem |
| 36 | Hauptsteuergerät |
| 38 | Verbindungsleitung |
| 40 | Schnittstelle |
| 42 | Hardware-Gateway |
| 44 | Widerstand |
| 46 | Fehlstelle |
| 48 | Leitungsbruch |

**Patentansprüche**

1. Landwirtschaftliche Verteilmaschine, mit zumindest einem Hauptsteuergerät (36) zum Steuern und Regeln von einer Mehrzahl von elektrischen Steuergeräten (30), welche jeweils einer Funktionseinheit (26) der Maschine (10) zugeordnet sind, wobei die Funktionseinheit (26) in Form einer Reiheneinheit, Düseneinheit oder dergl. ausgebildet ist, mittels welcher das zu verteilende Verteilgut auf einer landwirtschaftlichen Fläche ausgebracht wird, wobei mittels der Steuergeräte (30) jeweils

   - verschiedenste Dosierorgane und/oder Stellelemente ein- und/oder ausgeschaltet und/oder verstellt werden können
   - und/oder Sensordaten erfasst werden können
   - und/oder elektrische Verbraucher geschaltet, ein- und/oder ausgeschaltet bzw. geregelt werden können

      - und/oder stromführende Leitungen geschaltet, ein- und/oder ausgeschaltet werden können
      - und/oder verschiedenste elektrische Elemente betrieben werden können,

   wobei die elektrischen und/oder signaltechnischen Verbindungen zwischen dem Hauptsteuergerät (36) und der Mehrzahl von Steuergeräten (30) durch ein CAN-Bus-System (34) und/oder durch ein Spannungsversorgungssystem (35) gebildet sind, **dadurch gekennzeichnet, dass** die elektrischen und/oder signaltechnischen Verbindungen des CAN-Bus-Systems (34) und/oder des Spannungsversorgungssystems (35) als Ringleitung (32) ausgeführt ist/sind, welche Ringleitung (32) sich aus einer Mehrzahl von Verbindungsleitungen (38) zusammensetzt, wobei jeweils eine zweiseitige Einspeisung von Signalen und/oder Nachrichten vom Hauptsteuergerät (36) und/oder von der Spannungsversorgungseinheit in Richtung zu den Steuergeräten (30) bzw. der Mehrzahl von Steuergeräten (30) erfolgt.

2. Landwirtschaftliche Maschine nach Anspruch 1, **dadurch gekennzeichnet, dass** jeweils eine separate Verbindungsleitung (38) zwischen dem Hauptsteuergerät (36) und einem Steuergerät (30) angeordnet ist, oder dass eine separate Verbindungsleitung (38) jeweils zwischen zwei Steuergeräten (30) angeordnet ist.

3. Landwirtschaftliche Maschine nach Anspruch 1 oder 2, **dadurch gekennzeichnet, dass** die Summe an Verbindungsleitungen (38) sich aus der Summe von vorhandenen Steuergeräten (30) addiert mit der Anzahl an Hauptsteuergeräten (36) bzw. aus der Summe von vorhandenen Stromversorgungseinheiten addiert mit der Zahl 1 ergibt.

4. Landwirtschaftliche Maschine nach einem der vorhergehenden Ansprüche, **dadurch gekennzeichnet, dass** das CAN-Bus-System (34) in eine Mehrzahl, entsprechend der Anzahl an vorhandenen Steuergeräten (30) von einzelnen in sich funktionsfähigen CAN-Bus-Systemen aufgeteilt ist bzw. wird.

5. Landwirtschaftliche Maschine nach einem der vorhergehenden Ansprüche, **dadurch gekennzeichnet, dass** die einzelnen in sich funktionsfähigen CAN-Bus-Systeme mittels eines Hardware-Gateways (42) verbindbar sind.

6. Landwirtschaftliche Maschine nach einem der vorhergehenden Ansprüche, **dadurch gekennzeichnet, dass** zur Maschinendiagnose ein Testsignal vom Hauptsteuergerät (36) zweiseitig initiiert wird und anschließend sequentiell an alle Steuergeräte (30) weitergegeben wird, und wieder zurück.

7. Landwirtschaftliche Maschine nach einem der vorhergehenden Ansprüche, **dadurch gekennzeichnet, dass** jedem Steuergerät (30) zumindest ein Widerstand (44) zugeordnet ist, oder dass dieser in das Hardware-Gateway (42) integriert ist, oder dass das Hardware-Gateway (42) derartig ausgeführt ist, dass kein Widerstand (44) benötigt wird.

8. Landwirtschaftliche Maschine nach einem der vorhergehenden Ansprüche, **dadurch gekennzeichnet, dass** das Spannungsversorgungssystem (35) bei einem Leitungsbruch (48) einen Ist-Wert & Soll-Wert Vergleich durchführt, auf dessen Basis ermittelt wird, wie viele Steuergeräte (30) von welcher Seite der zweiseitigen Anbindung an eine Spannungsversorgungseinheit und/oder ein Hauptsteuergerät (36) versorgt werden.

9. Verfahren zum Betreiben einer landwirtschaftlichen Verteilmaschine, die zumindest ein Hauptsteuergerät (36) zum Steuern und Regeln von einer Mehrzahl von elektrischen Steuergeräten (30) aufweist, welche jeweils einer Funktionseinheit (26) der Maschine (10) zugeordnet sind, wobei die Funktionseinheit (26) in Form einer Reiheneinheit, Düseneinheit oder dergl. ausgebildet ist, mittels welcher das zu verteilende Verteilgut auf einer landwirtschaftlichen Fläche ausgebracht wird, wobei mittels der Steuergeräte (30) jeweils

   - verschiedenste Dosierorgane und/oder Stellelemente ein- und/oder ausgeschaltet und/oder verstellt werden können
   - und/oder Sensordaten erfasst werden können
   - und/oder elektrische Verbraucher geschaltet, ein- und/oder ausgeschaltet bzw. geregelt werden können
   - und/oder stromführende Leitungen geschaltet, ein- und/oder ausgeschaltet werden können
   - und/oder verschiedenste elektrische Elemente betrieben werden können,

   wobei die elektrischen und/oder signaltechnischen Verbindungen zwischen dem Hauptsteuergerät (36) und der Mehrzahl von Steuergeräten (30) durch ein CAN-Bus-System (34) und/oder durch ein Spannungsversorgungssystem (35) gebildet sind, **dadurch gekennzeichnet, dass** die elektrischen und/oder signaltechnischen Verbindungen des CAN-Bus-Systems (34) und/oder des Spannungsversorgungssystems (35) als Ringleitung (32) ausgeführt ist/sind, welche Ringleitung (32) sich aus einer Mehrzahl von Verbindungsleitungen (38) zusammensetzt, wobei jeweils eine zweiseitige Einspeisung von Signalen und/oder Nachrichten vom Hauptsteuergerät (36) und/oder von der Spannungsversorgungseinheit in Richtung zu den Steuergeräten (30) bzw. der Mehrzahl von Steuergeräten (30) erfolgt.

10. Verfahren nach Anspruch 9, bei dem das CAN-Bus-System (34) in eine Mehrzahl, entsprechend der Anzahl an vorhandenen Steuergeräten (30) von einzelnen in sich funktionsfähigen CAN-Bus-Systemen aufgeteilt wird.

11. Verfahren nach Anspruch 9 oder 10, bei dem die einzelnen in sich funktionsfähigen CAN-Bus-Systeme mittels eines Hardware-Gateways (42) verbunden werden und/oder miteinander kommunizieren.

12. Verfahren nach einem der Ansprüche 9 bis 11, bei dem zur Maschinendiagnose ein Testsignal vom Hauptsteuergerät (36) zweiseitig initiiert wird und anschließend sequentiell an alle Steuergeräte (30) weitergegeben wird, und wieder zurück.

13. Verfahren nach einem der Ansprüche 9 bis 12, bei dem jedem Steuergerät (30) zumindest ein Widerstand (44) zugeordnet ist, oder dass dieser in das Hardware-Gateway (42) integriert ist, oder dass das Hardware-Gateway (42) derartig ausgeführt ist, dass kein Widerstand (44) benötigt wird.

14. Verfahren nach einem der Ansprüche 9 bis 13, bei dem das Spannungsversorgungssystem (35) bei einem Leitungsbruch (48) einen Vergleich zwischen Ist-Werten und Soll-Werten durchführt, auf dessen Basis ermittelt wird, wie viele Steuergeräte (30) von welcher Seite der zweiseitigen Anbindung an eine Spannungsversorgungseinheit und/oder ein Hauptsteuergerät (36) versorgt werden.

**Claims**

1. An agricultural distribution machine, with at least one main control device (36) for controlling and regulating a plurality of electrical control devices (30), which are each assigned to a functional unit (26) of the machine (10), wherein the functional unit (26) is designed in the form of a row unit, nozzle unit, or the like, by means of which the material to be distributed is spread on an agricultural area, wherein, by means of the control devices (30), in each case

- various different metering organs and/or actuating elements can be switched on and/or switched off and/or be adjusted,
- and/or sensor data can be detected,
- and/or electrical loads can be switched, switched on and/or switched off, or be regulated,
- and/or current-carrying lines can be switched, switched on and/or switched off,
- and/or various different electrical elements can be operated,

wherein the electrical and/or signal connections between the main control device (36) and the plurality of control devices (30) are formed by a CAN bus system (34) and/or by a power supply system (35), **characterised in that** the electrical and/or signal connections of the CAN bus system (34) and/or of the power supply system (35) is/are designed as a ring circuit (32), which ring circuit (32) is composed of a plurality of connecting lines (38), wherein a two-sided feed of signals and/or messages is carried out in each case from the main control device (36) and/or from the power supply unit in the direction to the control devices (30) or to the plurality of control devices (30).

2. The agricultural machine according to claim 1, **characterised in that** a separate connecting line (38) is in each case arranged between the main control device (36) and a control device (30), or **in that** a separate connecting line (38) is in each case arranged between two control devices (30).

3. The agricultural machine according to claim 1 or 2, **characterised in that** the sum of connection lines (38) results from the sum of control devices present (30) added to the number of main control devices (36), or from the sum of power supply units present added to the number 1.

4. The agricultural machine according to one of the previous claims, **characterised in that** the CAN bus system (34) is or will be divided into a plurality of individual, self-sufficiently functional CAN bus systems the number of which corresponds to the number of control devices (30) present.

5. The agricultural machine according to one of the previous claims, **characterised in that** the individual, self-sufficiently functional CAN bus systems are connectable by means of a hardware gateway (42).

6. The agricultural machine according to one of the previous claims, **characterised in that**, for the purpose of machine diagnostics, a test signal from the main control device (36) is initiated on both sides and is then passed on sequentially to all control devices (30) and back again.

7. The agricultural machine according to one of the previous claims, **characterised in that**, at least one resistor (44) is assigned to each control device (30), or that it is integrated into the hardware gateway (42), or that the hardware gateway (42) is designed in such a manner that no resistor (44) is required.

8. The agricultural machine according to one of the previous claims, **characterised in that**, in the event of a line break (48), the power supply system (35) performs an actual/target value comparison based on which it is determined how many control devices (30) are supplied from which side of the two-sided connection to a power supply unit and/or to a main control device (36).

9. A method for operating an agricultural distribution machine, which has at least one main control device (36) for controlling and regulating a plurality of electrical control devices (30), which are each assigned to a functional unit (26) of the machine (10), wherein the functional unit (26) is designed in the form of a row unit, nozzle unit, or the like, by means of which the material to be distributed is spread on an agricultural area, wherein, by means of the control devices (30), in each case

- various different metering organs and/or actuating elements can be switched on and/or switched off and/or be adjusted,
- and/or sensor data can be detected,
- and/or electrical loads can be switched, be switched on and/or switched off, or be regulated,
- and/or current-carrying lines can be switched, switched on and/or switched off,
- and/or various different electrical elements can be operated,

wherein the electrical and/or signal connections between the main control device (36) and the plurality of control devices (30) are formed by a CAN bus system (34) and/or by a power supply system (35), **characterised in that** the electrical and/or signal connections of the CAN bus system (34) and/or of the power supply system (35) is/are designed as a ring circuit (32), which ring circuit (32) is composed of a plurality of connecting lines (38), wherein a two-sided feed of signals and/or messages is carried out in each case from the main control device (36) and/or from the power supply unit in the direction to the control devices (30) or to the plurality of control devices (30).

10. The method according to claim 9, in which the CAN bus system (34) is divided into a plurality of individual, self-sufficiently functional CAN bus systems the number of which corresponds to the number of control devices (30) present.

11. The method according to claim 9 or 10, in which the individual, self-sufficiently functional CAN bus systems are connected and/or communicate with each other by means of a hardware gateway (42).

12. The method according to one of the claims 9 to 11, in which, for the purpose of machine diagnostics, a test signal from the main control device (36) is initiated on both sides and is then passed on sequentially to all control devices (30) and back again.

13. The method according to one of the claims 9 to 12, in which at least one resistor (44) is assigned to each control device (30), or in which this resistor (44) is integrated into the hardware gateway (42), or in which the hardware gateway (42) is designed in such a manner that no resistor (44) is required.

14. The method according to one of the claims 9 to 13, in which, in the event of a line break (48), the power supply system (35) performs a comparison between actual values and target values based on which it is determined how many control devices (30) are supplied from which side of the two-sided connection to a power supply unit and/or a to main control device (36).

**Revendications**

1. Épandeur agricole doté d'au moins un appareil de commande principal (36) destiné à commander et réguler une pluralité d'appareils de commande électriques (30) qui sont chacun associés à une unité de fonction (26) de la machine (10), ladite unité de fonction (26) étant réalisée sous forme d'une unité de rangée, unité à buses ou équivalent au moyen de laquelle le matériau d'épandage à épandre est réparti sur une surface agricole, les appareils de commande (30) permettant respectivement

- d'allumer et/ou d'éteindre, et/ou de régler des organes de dosage et/ou éléments de réglage les plus divers
- et/ou de détecter des données de capteur
- et/ou de connecter, d'allumer et/ou d'éteindre voire régler des consommateurs électriques
- et/ou de connecter, d'allumer et/ou d'éteindre des fils conduisant l'électricité
- et/ou de faire fonctionner des éléments électriques les plus divers,
les connexions électriques et/ou signalétiques entre l'appareil de commande principal (36) et la pluralité d'appareils de commande (30) étant formées par un système de bus CAN (34) et/ou par un système d'alimentation en tension (35),
**caractérisé en ce que** les connexions électriques et/ou signalétiques du système bus CAN (34) et/ou du système d'alimentation en tension (35) est/sont réalisée(s) sous forme de fil annulaire (32), ledit fil annulaire (32) se composant d'une pluralité de fils de connexion (38), une alimentation bilatérale de signaux et/ou de messages étant respectivement effectuée par l'appareil de commande principal (36) et/ou par l'unité d'alimentation en tension en direction des appareils de commande (30) ou de la pluralité d'appareils de commande (30).

2. Machine agricole selon la revendication 1, **caractérisée en ce qu'**un fil de connexion (38) séparé est respectivement agencé entre l'appareil de commande principal (36) et un appareil de commande (30), ou **en ce qu'**un fil de connexion (38) séparé est respectivement agencé entre deux appareils de commande (30).

3. Machine agricole selon la revendication 1 ou 2, **caractérisée en ce que** la somme des lignes de connexion (38) résulte de la somme des appareils de commande (30) disponibles ajoutée au nombre d'appareils de commande principaux (36) ou de la somme des unités d'alimentation électrique présentes ajoutée au chiffre 1.

**4.** Machine agricole selon l'une quelconque des revendications précédentes, **caractérisée en ce que** le système de bus CAN (34) est ou sera divisé en une pluralité, correspondant au nombre d'appareils de commande (30) présents, de systèmes de bus CAN individuels fonctionnant en soi.

**5.** Machine agricole selon l'une quelconque des revendications précédentes, **caractérisée en ce que** les systèmes de bus CAN individuels fonctionnant en soi peuvent être reliés au moyen d'une passerelle matérielle (42).

**6.** Machine agricole selon l'une quelconque des revendications précédentes, **caractérisée en ce que** pour le diagnostic de la machine, un signal test est généré bilatéralement par l'appareil de commande principal (36) et est ensuite transmis séquentiellement à tous les appareils de commande (30), et inversement.

**7.** Machine agricole selon l'une quelconque des revendications précédentes, **caractérisée en ce qu'**au moins une résistance (44) est associée à chaque appareil de commande (30), ou que celle-ci est intégrée dans la passerelle matérielle (42) ou que ladite passerelle matérielle (42) est réalisée de sorte qu'aucune résistance (44) n'est nécessaire.

**8.** Machine agricole selon l'une quelconque des revendications précédentes, **caractérisée en ce que** le système d'alimentation en tension (35) effectue une comparaison valeur réelle & valeur de consigne en cas de rupture de ligne (48), sur la base de laquelle est déterminé combien d'appareils de commande (30) sont alimentés par quel côté de la connexion bilatérale à une unité d'alimentation en tension et/ou à un appareil de commande principal (36).

**9.** Procédé de fonctionnement d'un épandeur agricole qui présente au moins un appareil de commande principal (36) destiné à commander et réguler une pluralité d'appareils de commande électriques (30) qui sont chacun associés à une unité de fonction (26) de la machine (10), ladite unité de fonction (26) étant réalisée sous forme d'une unité de rangée, unité à buses ou équivalent au moyen de laquelle le matériau d'épandage à épandre est réparti sur une surface agricole, les appareils de commande (30) permettant respectivement

- d'allumer et/ou d'éteindre, et/ou de régler des organes de dosage et/ou éléments de réglage les plus divers
- et/ou de détecter des données de capteur
- et/ou de connecter, d'allumer et/ou d'éteindre voire régler des consommateurs électriques
- et/ou de connecter, d'allumer et/ou d'éteindre des fils conduisant l'électricité
- et/ou de faire fonctionner des éléments électriques les plus divers,

les connexions électriques et/ou signalétiques entre l'appareil de commande principal (36) et la pluralité d'appareils de commande (30) étant formées par un système de bus CAN (34) et/ou par un système d'alimentation en tension (35),
**caractérisé en ce que** les connexions électriques ou signalétiques du système bus CAN (34) et/ou du système d'alimentation en tension (35) est/sont réalisée(s) sous forme de fil annulaire (32), ledit fil annulaire (32) se composant d'une pluralité de fils de connexion (38), une alimentation bilatérale de signaux et/ou de messages étant respectivement effectuée par l'appareil de commande principal (36) et/ou par l'unité d'alimentation en tension en direction des appareils de commande (30) ou de la pluralité d'appareils de commande (30).

**10.** Procédé selon la revendication 9, dans lequel le système de bus CAN (34) est divisé en une pluralité, correspondant au nombre d'appareils de commande (30) présents, de systèmes de bus CAN individuels fonctionnant en soi.

**11.** Procédé selon la revendication 9 ou 10, dans lequel les systèmes de bus CAN individuels fonctionnant en soi sont reliés et/ou communiquent entr'eux au moyen d'une passerelle matérielle (42)

**12.** Procédé selon l'une quelconque des revendications 9 à 11, dans lequel pour le diagnostic de la machine, un signal test est généré bilatéralement par l'appareil de commande principal (36) et est ensuite transmis séquentiellement à tous les appareils de commande (30), et inversement.

**13.** Procédé selon l'une quelconque des revendications 9 à 12, dans lequel au moins une résistance (44) est associée à chaque appareil de commande (30), ou que celle-ci est intégrée dans la passerelle matérielle (42) ou que ladite passerelle matérielle (42) est réalisée de sorte qu'aucune résistance (44) n'est nécessaire.

**14.** Procédé selon l'une quelconque des revendications 9 à 13, dans lequel le système d'alimentation en tension (35) effectue une comparaison valeur réelle & valeur de consigne en cas de rupture de ligne (48), sur la base de laquelle on détermine combien d'appareils de commande (30) sont alimentés par quel côté de la connexion bilatérale à une unité d'alimentation en tension et/ou à un appareil de commande principal (36).

*Fig. 1*

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006038688 A1
- DE 102010061241 A1
- EP 0864457 B1

- DE 10324724 A1
- DE 10310302 B4
- WO 2013103937 A1